Europäisches Patentamt

European Patent Office

Office européen des brevets

(11) Publication number: **0 240 181**
**A1**

## (12) EUROPEAN PATENT APPLICATION

(21) Application number: 87301945.9

(51) Int. Cl.⁴: **A47J 37/06**

(22) Date of filing: 06.03.87

(30) Priority: 26.03.86 GB 8607608

(43) Date of publication of application:
07.10.87 Bulletin 87/41

(84) Designated Contracting States:
DE ES FR GB

(71) Applicant: **THORN EMI Appliances Limited**
**THORN EMI House Upper Saint Martin's Lane**
**London, WC2H 9ED(GB)**

(72) Inventor: **Heelis, Michael**
**11, Medway Court**
**Garrard Gardens Sutton Coldfield(GB)**

(74) Representative: **Marsh, Robin Geoffrey et al**
**Thorn EMI Patents Limited The Quadrangle**
**Westmount Centre Uxbridge Road**
**Hayes Middlesex, UB4 0HB(GB)**

(54) Domestic cooking appliance.

(57) A grill comprises a grill compartment having an upper wall (11) consisting of, or including, a glass panel (12) which permits the interior of the compartment to be viewed from above. The grill may be mounted in an existing worktop in a kitchen, glass panel (12) being coplanar with, and providing an extension of, an upper surface of the worktop.

FIG. 1

EP 0 240 181 A1

Xerox Copy Centre

# DOMESTIC COOKING APPLIANCE

This invention relates to a domestic cooking appliance, and it relates particularly to a grill.

In known cooking appliances the grill is usually positioned either at waist level or at eye level.

In the case of a waist level grill a separate grill compartment may be provided, or alternatively an oven compartment may have a heating element dedicated specifically to the grilling function. In both instances, however, it may be difficult to monitor cooking of foodstuffs unless the grill tray is partially removed from the grill compartment or oven, and this can be inconvenient.

An eye-level grill affords somewhat improved visibility but, being of a more open construction, may give rise to cleaning problems due to splashing and spitting of fats, juices and the like.

It is therefore an object of the present invention to provide a domestic cooking appliance which at least alleviates the above-mentioned problems.

Accordingly there is provided a grill including a grill compartment, an upper wall of a grill compartment, or at least a part of said upper wall, being made of a light-transmissive material allowing the interior of the compartment to be viewed from above.

The inventors envisage that an appliance in accordance with this invention affords improved visibility of the interior of the compartment and, moreover, is relatively free from the problems (e.g. splashing and spitting of food stuffs) particularly associated with known eye-level grills.

The present invention may comprise a grill compartment suitable for mounting beneath an existing worktop in a kitchen, said upper wall being generally coplanar with and, in effect, providing an extension of an upper surface of the worktop. Alternatively the grill compartment could constitute part of a stand-alone cooking appliance.

To assist is cleaning, said upper wall, or said part of said upper wall, may be pivotally displaceable with respect to the compartment.

Respective sources of radiant heat, for example gas burners, may be arranged adjacent opposite side walls of the compartment and respective means, effective to guide combustion gases produced by the burners away from the compartment may be provided.

In order that the invention may be carried readily into effect an embodiment thereof is now described, by way of example only, by reference to the accompanying drawings of which

Figure 1 shows a schematic, cross-sectional view through a grill compartment and,

Figure 2 shows a gas burner used in the grill compartment of Figure 1.

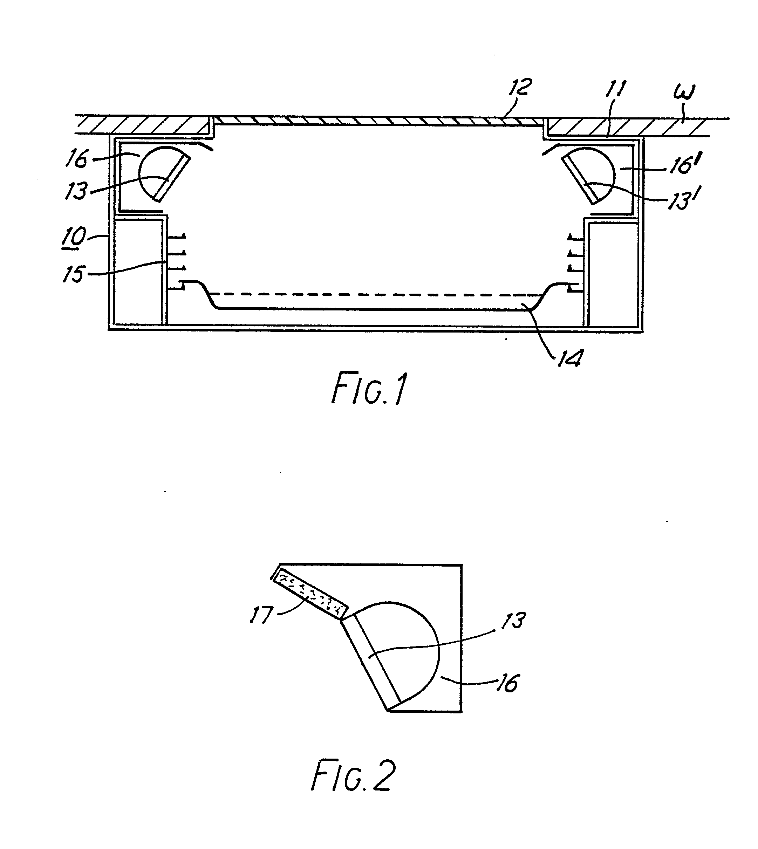

Referring now to Figure 1 of the drawings, a domestic cooking appliance comprises a grill, shown generally at 10, which is mounted below an existing worktop W in a kitchen.

The grill comprises a generally box-like compartment fitted with a fold-down door (not shown) which, in the closed position, gives the appliance a generally neat, unobstrusive appearance. The side, back and base walls of the compartment are made of a durable, fire-proof material (e.g. stainless or enamelled steel) and the upper wall 11 consists of, or at least includes, a glass panel 12 which is set in an opening in the worktop. The panel is coplanar with, and, in effect, provides an extension of, an upper surface of the worktop and so allows the interior of the compartment to be viewed from above.

The grill has two burners 13, 13' which are mounted adjacent respective side walls of the compartment to allow a substantially unobstructed view of the interior.

The gas burners may be of the surface combustion type, being of a ceramic or metal gauze construction, or, alternatively, gas jet burners mounted adjacent suitable metal frets could be used. The burners are so constructed and positioned as to direct radiant heat evenly onto foodstuffs supported on a removeable grill tray 14. The burners may, for example, take the form of generally flat, inwardly sloping radiant panels, though, alternatively, curved panels could be used to achieve improved concentration of heat in the compartment. The grill tray is supported on ledges 15 at a selected one of a number of different levels in the compartment.

Since the compartment is of a generally closed construction inlet ports (not shown) are provided to improve a supply of combustion air to the burners, and respective cowls and or flueways, shown - schematically at 16, 16' in the drawing, are provided adjacent the burners to lead combustion products away from the compartment. If desired, extraction of combustion products may be assisted by provision of fans in the flueways.

In one embodiment of the invention, illustrated schematically in Figure 2, each burner 13 is mounted in the mouth of a respective flueway 16 which is closed off by a body 17 of a porous ceramic material such as a ceramic foam or a ceramic plaque of the kind used in some known forms of surface combustion grill. Hot combustion gases can pass through body 17 and in doing so heat the ceramic material causing it to radiate, so augmenting radiant heat incident on foodstuffs on the grill tray.

It will be understood that although panel 12, shown in Figure 1, comprises a single sheet of glass, the panel may alternatively comprise two (or more) sheets held in spaced apart relationship. This arrangement reduces occurrence of condensation on the panel, giving improved visibility, and also leads to lower temperatures at the upper (exterior) surface of the panel. It will be appreciated that through use of the grill, panel 12 may become warm and could, therefore, be used as a "keep warm" area suitable for warming dishes, plates etc. and storing cooked foodstuffs in readiness for transfer to the table.

To assist in cleaning, the upper wall of the grill compartment, or at least panel 12, may be displaceable pivotally with respect to the compartment.

It will be understood that while the invention has been described by reference to a grill-only appliance, the invention also encompasses a stand-alone cooking appliance incorporating a grill. Furthermore, the present invention encompasses a grill incorporating one or more electrically energised sources of radiant heat e.g. electrical resistance elements or incandescent lamps, especially halogonated tungsten filament lamps.

## Claims

1. A grill including a grill compartment, an upper wall of the grill compartment, or at least a part of said upper wall, being made of a light-transmissive material allowing the interior of the compartment to be viewed from above.

2. A grill according to Claim 1 wherein said upper wall, or said part of said upper wall, is displaceable pivotally with respect to the compartment.

3. A grill according to Claim 1 or Claim 2 including respective sources of radiant heat arranged adjacent opposite side walls of the compartment.

4. A grill according to Claim 3 wherein said sources of radiant heat comprise gas burners.

5. A grill according to Claim 3 wherein said sources of radiant heat are energised electrically.

6. A grill according to Claim 4 or Claim 5 including means effective to guide combustion gases, produced by the burners away from the compartment.

7. A grill according to any one of Claims 1 to 6 wherein said grill compartment is intended to be mounted below a kitchen worktop, so that an upper surface of said upper wall, or said part of said upper wall, is substantially coplanar with an upper surface of the worktop.

FIG.1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 108 147 (HAAS & SOHN)<br><br>* Whole document *<br>--- | 1,2,3,<br>5,7 | A 47 J 37/06 |
| A | US-A-3 267 924 (PAYNE)<br><br>* Whole document *<br>--- | 3,4,6,<br>7 | |
| X | US-A-2 744 994 (BRÜCKNER et al.)<br>* Figures 1,2 *<br>--- | 1,2,3,<br>5 | |
| X | FR-A- 387 252 (TEMESVARY et al.)<br>* Whole document *<br>--- | 1,2 | |
| X | US-A-2 502 685 (WARNER)<br><br>* Whole document *<br><br>----- | 1,2,3,<br>5 | **TECHNICAL FIELDS SEARCHED (Int. Cl.4)**<br><br>A 47 J |

The present search report has been drawn up for all claims

| Place of search | Date of completion of the search | Examiner |
|---|---|---|
| THE HAGUE | 01-07-1987 | SCHARTZ J. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503 03 82